# EUROPÄISCHE PATENTSCHRIFT

(11) **EP 1 764 286 B1**
(45) Veröffentlichungstag und Bekanntmachung des Hinweises auf die Patenterteilung: **18.11.2009**
(21) Anmeldenummer: 06017415.8
(22) Anmeldetag: 22.08.2006
(51) Int. Cl.: B62D 25/04, B62D 27/02

(54) **Karosseriesäule**
Vehicle chassis pillar
Montant de baie ou pilier de carrosserie de véhicule

(30) Priorität: 15.09.2005 DE 102005044066
(43) Veröffentlichungstag der Anmeldung: 21.03.2007
(73) Patentinhaber: GM Global Technology Operations, Inc., Detroit, MI 48265-3000 (US)
(72) Erfinder: Lessmeister, Roland, 67697 Otterberg (DE)
(74) Vertreter: Strauss, Peter

(56) Entgegenhaltungen:
- EP-A2- 1 127 776
- WO-A-2005/021361
- DE-A1- 10 302 463
- JP-A- 10 218 018

## Beschreibung

Die Erfindung bezieht sich auf ein Rahmenseitenteil der Karosserie von Kraftfahrzeugen, auf Karosseriesäulen eines Kraftfahrzeugs und deren innenliegende Profilteile. Eine derartige Karosseriesäule ist bevorzugt eine A-Säule.

Die A-Säule eines Kraftfahrzeugs besteht aus einem innenliegenden Profilteil, einem äußeren Profilteil als Bestandteil der äußeren Seitenwand, und einer zwischen diesen Profilteilen befindlichen Verstärkung. Der innenliegende Teil der A-Säule benötigt bekanntermaßen eine Profilform, die es ermöglicht, ein vorderes Dachrahmenprofil quer dazu anzulegen um beide Teile zu verschweißen. Beim Zusammenbau der Karosserie wird zunächst das innenliegende Profilteil stehen und mit dem vorderen Dachrahmenprofil verschweißt. Je nach der Zusammenbaufolge des Fahrzeugs wird dann die äußere Seitenwand nebst A-Säulenverstärkung sowie das Dach in zwei oder drei Blechlagen punktgeschweißt.

Das innenliegende A-Säulenprofil weist im allgemeinen eine T-Form auf, wobei im dreischenkeligen Knotenbereich das vordere Dachrahmenprofil aufgelegt wird. Diese Profilform erfordert einen großen Rohblechzuschnitt und bedingt einen großen Materialabfall. Da weiterhin für diese Profilform nur Stahl mit angepasster minderer Güte verwendet werden kann muss aus Gründen der Front-Crashanforderungen in diesem Bereich die Materialstärke erhöht werden. Die gleiche Anforderung ergibt sich, wenn die Karosserie während der Herstellung am vorderen und hinteren Dachrahmenprofil hochgehoben wird um zu verschiedenen Bearbeitungsstationen bewegt zu werden. Die erhöhte Blechdicke führt jedoch zu einem höheren Gesamtgewicht des Fahrzeugs und zu einem erhöhten Kraftstoffverbrauch.

Die EP 1153819 A1 beschreibt ein Karosseriegrundaufbau für Kraftfahrzeuge. Die A-Säule bzw. ihr innenliegendes Profilteil selbst verfügt über keinen Schenke zur Anbindung des vorderen Dachrahmens. Vielmehr sind das innenliegende A-Säulenprofil und die dreischenkelige Knotenverbindung zweistückig ausgebildet. Hierbei besitzt die separate Knotenverbindung eine durch ein Keilstück gebildete Flächenabstufung. Die Flächenabstufung verleiht dem Fahrzeugaufbau einen glatten Anlageflansch, welche durch das Dachrahmenprofil und die Knotenverbindung definiert ist, um für die Windschutzscheibe eine glatte Aufnahmefläche bereitzustellen. Diese Lösung bedingt einen aufwendigen Zusammenbau der Karosserie da insgesamt drei Teile verbaut werden müssen.

Die WO2005/021361 offenbart eine Trägerstruktur, bei der zwei gegenüberliegenden gattungsgemäßen Karosseriesäulen aus Doppelplatinen gebildet sind. Der umlaufende Rand bildet Flansche für Tür- und/oder Fensterdichtungen. Die jeweiligen Enden der Säulen sind als der Form der bodenseitigen Längsträger und der Längsträger des Dachrahmens angepasste Anschlusszonen zur Anbindung an die bodenseitigen Längsträger und die Längsträger des Dachrahmens ausgebildet.

Die EP 1 127 776 offenbart eine Anordnung eines tragenden Bauteils einer Fahrzeugkarosserie, die zwei Blechteile mit Flanschen umfasst. Die Flanschen wenigstens eines der Blechteile sind durch Ausstanzen von Bereichen wenigstens einer Fläche und Abstellen des Flansches dieses Blechteils in eine von der Fläche verschiedene Ebene gebildet.

Die DE 103 02 463 Die JP 10 218018 A offenbaren jeweils weitere verschweißte Verbindung zwischen einem Dachrahmenabschnitt und einer Säule.

Ausgehend vom oben genannten Stand der Technik besteht das der Erfindung zugrunde liegende technische Problem in der Bereitstellung einer Karosseriesäule, insbesondere einer A-Säule, die eine einfachere Verbindung mit dem vorderen Dachrahmenprofil bei verringertem Gewicht ermöglicht.

Dieses technische Problem wird erfindungsgemäß durch eine Karosseriesäule, insbesondere eine A-Säule für Kraftfahrzeuge, insbesondere Personenkraftwagen, mit den im unabhängigen Anspruch angegebenen Merkmalen gelöst. Vorteilhafte Weiterbildungen werden durch die Unteransprüche wiedergegeben.

Die nachfolgende Erfindungsbeschreibung bezieht sich zum Zwecke der vereinfachten Darstellung auf die A-Säule eines Kraftfahrzeugs und ihre Anbindung an das vordere Dachrahmenprofil. Der Fachmann wird jedoch erkennen, dass die vorgeschlagene Lösung auch bei einer B-Säule oder einer C-Säule anwendbar ist die mit dem mittleren bzw. hinteren Dachrahmenprofil zu verbinden ist.

Die erfindungsgemäße Lösung sieht vor, beim innenliegenden Profilteil der A-Säule auf eine dreischenkelige Knotenverbindung zu verzichten und für die Verbindung des innenliegenden A-Säulenprofils mit dem vorderen Dachrahmenprofil mindestens eine aus dem innenliegenden Profilbereich der A-Säule herausgeführte Haltelasche vorzusehen. Neben einer das Dachrahmenprofil weitgehend mittig aufnehmenden Haltelasche sind zwei weitere Haltelaschen zum Auflegen und Verschweißen des vorderen und hinteren Bereichs des Dachrahmenprofils vorgesehen.Die Haltelaschen befinden sich im Anbindungsbereich in dem ansonsten die dreischenkelige Knotenverbindung wäre, d.h. im unterbrochenen Bereich des Anlageflansches des A-Säulenprofils. Zur Befestigung wird das vordere Dachrahmenprofil von oben auf- bzw. eingelegt, kommt flächig auf der Haltelasche zu liegen, und kann anschließend mit dieser verschweißt werden. Über die Position der Haltelaschen wird hierbei die Höhe definiert in der der Dachrahmenprofil zu liegen kommt.

Das Herausführen der Haltelasche kann dergestalt sein, dass die Haltelasche teilweise aus dem A-Säulenprofil ausgestanzt und dann aus dem Profil herausgedrückt bzw. umgelegt wird. Die Fläche der seitlich nach innen gerichteten Haltelasche ist dabei zur Gewährleistung einer gleichmäßigen Flächenbelastung der Krümmung des endseitigen Abschnitts des vorderen Dachrahmenprofils angepasst bzw. parallel zu dieser. Um höchstens drei zu verschweißende Blechlagen zu gewährleisten können alle strukturschwachen Flansche hierfür freigeschnitten werden.

Die vorgeschlagene Lösung ermöglicht es wegen der vereinfachten Profilform der A-Säule hochfeste Stähle zu verwenden. Hierdurch können geringere Materialdicken gewählt werden und ergibt sich eine Gewichtsersparnis. Eine weitere Gewichtsersparnis ergibt sich durch den Wegfall der dreischenkeligen Knotenverbindung. Gleichzeitig ergibt sich eine gute Dachknotenstruktur infolge einer steifen Übereckanbindung. Weiterhin bedingt die vereinfachte Profilform eine Materialersparnis wegen eines verringerten Beschnittabfalls in der Herstellung der A-Säule.

Eine stabilere Anbindung des vorderen Dachrahmenprofils am innenliegenden A-Säulenprofil ergibt sich, wenn neben einer zentralen Haltelasche, welche das vordere Dachrahmenprofil weitgehend mittig aufnimmt, zwei weitere Haltelaschen vorgesehen sind, die sich bezogen auf die Profillängsrichtung vor und nach der zentralen Haltelasche befinden. Alternativ hierzu sind zwei Haltelaschen hintereinander vorgesehen. Das vordere Dachrahmenprofil kommt beim Einlegen in das A-Säulenprofil ebenfalls auf diese zusätzlichen Haltelaschen zu liegen wodurch mehr Schweißverbindungen möglich sind.

Um eine möglichst exakte Positionierung des vorderen Dachrahmenprofils relativ zum A-Säulenprofils zu gewährleisten ist die Haltelasche bevorzugterweise an ihrem dem A-Säulenprofil abgewandten Ende abgekantet um in eine hierzu korrespondierende durchgehende Öffnung des vorderen Dachrahmenprofils eingreifen zu können.

Im Anbindungsbereich ist der Anlageflansch des innenliegenden Profilteils unterbrochen um Platz zum Auflegen des Dachrahmenprofils von oben zu haben. Der Anlageflansch ist zudem an den dem Anbindungsbereich zugewandten Enden in bzw. entgegen der Profillängsrichtung abgesenkt. Die dadurch entstehenden rampenförmigen Abschnitte des Anlageflansches stellen zwei weitere Haltelaschen dar mit denen das vordere Dachrahmenprofil verschweißt werden kann. Hierdurch wird die Lage des vorderen Dachrahmenprofils in seitlicher Richtung festgelegt.

Im Rahmen der Fahrzeugproduktion muss die Karosserie entlang der Fertigungsstationen bewegt werden, wobei oftmals Greifer zum Einsatz kommen, welche das Fahrzeug von oben her aufnehmen. Zwei Aufnahmepunkte sind hierbei dicht benachbart zum Anbindungsbereich. Um hierbei die mechanische Stabilität des Anbindungsbereichs zu verbessern kann die Haltelasche zusätzlich eine durchgehende Öffnung zum Eingriff eines Rastelements des vorderen Dachrahmenprofils aufweisen.

Weitere Merkmale und Vorteile der Erfindung werden aus der folgenden detaillierten Beschreibung mit Bezug auf die beigefügten Zeichnungen erkennbar die nachfolgend als nicht beschränkende Beispiele gegeben sind. Es stellt dar:
- Fig. 1: eine perspektivische Seitenansicht einer Kfz-Karosserie
gemäß dem Stand der Technik,
- Fig. 2: eine innenliegende A-Säule nebst vorderem Dachrahmenprofil nach dem Stand der Technik,
- Fig. 3: eine innere A-Säule in der perspektivischen Seitenansicht,
- Fig. 4: den Anbindungsbereich A-Säule-vorderes Dachrahmenprofil in der perspektivischen Seitenansicht,
- Fig. 5: den Anbindungsbereich A-Säule-vorderes Dachrahmenprofil
in der Draufsicht, mit zusätzlicher Anbindung der A-Säulenverstärkung an den Dachrahmen,
- Fig. 6: das Verstärkungsblech für die A-Säule in einer perspektivischen Seitenansicht.

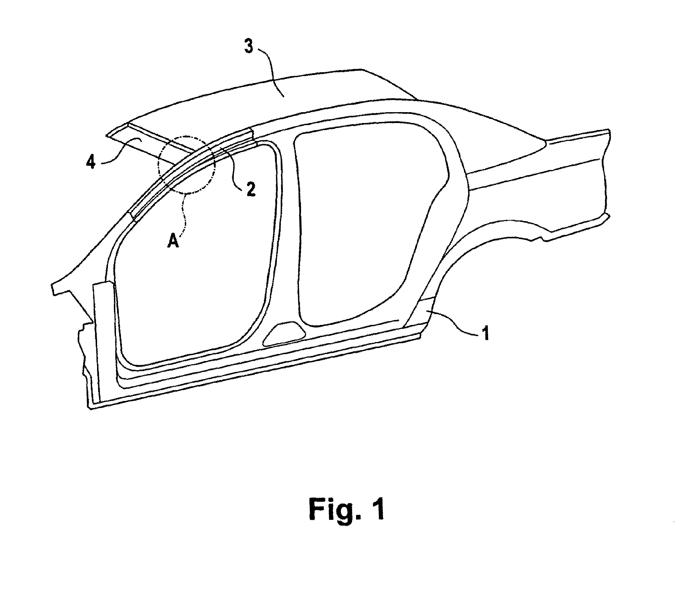

Die Figur 1 zeigt den seitlichen Teil der Karosserie eines Kraftfahrzeugs umfassend eine äußere Seitenwand 1, das innenliegende A-Säulenprofil 2 und das Dach 3. Das innenliegende A-Säuleprofil 2 ist mit dem vorderen Dachrahmen 4 im Anbindungsbereich A verschweißt.

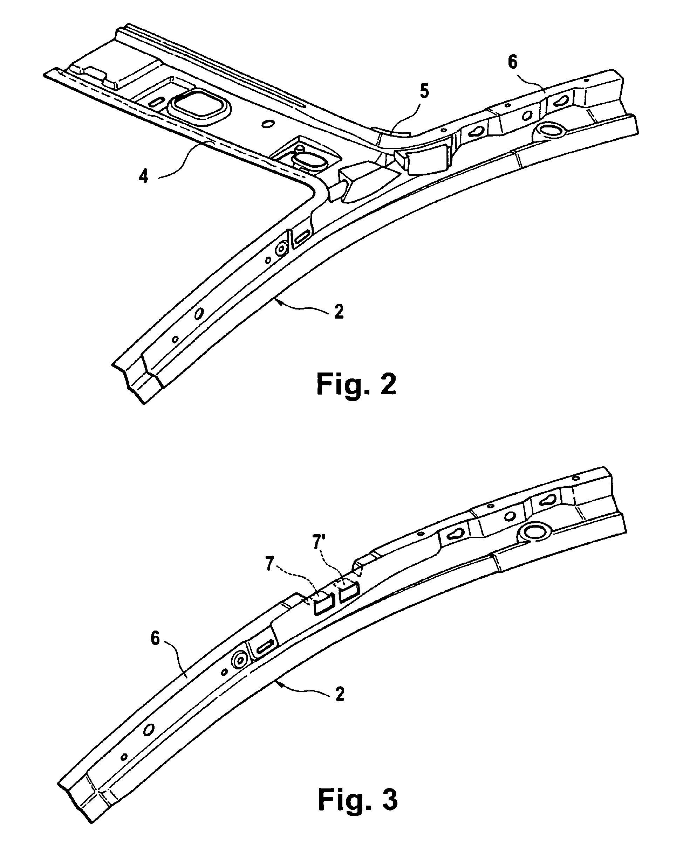

Figur 2 zeigt ein bekanntes, linksseitiges, innenliegende A-Säulenprofil 2 in T-Form. Beim Zusammenbau wird der vordere Dachrahmen 4 auf den seitlich abstehenden Schenkel 5 gelegt und geeignet verschweißt.

Figur 3 zeigt das linksseitige, innenliegende A-Säulenprofil 3 gemäß der vorliegenden Erfindung. Sie weist ein Hutprofil auf, verzichtet also auf einen von der Profillängsrichtung abstehenden Schenkel. Im Anbindungsbereich ist der Anlageflansch 6 unterbrochen und besitzt das innenliegende Teil 2 der A-Säule zwei Haltelaschen 7, 7'. Beim Zusammenbau der Karosserie kommt zuerst der innenliegende Teil 2 zu stehen, wird das vordere Dachrahmenprofil 4 von oben eingelegt und kommt auf den Haltelaschen 7,7' zu liegen. Jede der beiden Haltelaschen 7, 7' wird dann mit dem vorderen Dachrahmenprofil 4 verschweißt. Durch die Position der Haltelaschen wird eine Höhenfixierung des Dachrahmenprofils 4 vorgenommen.

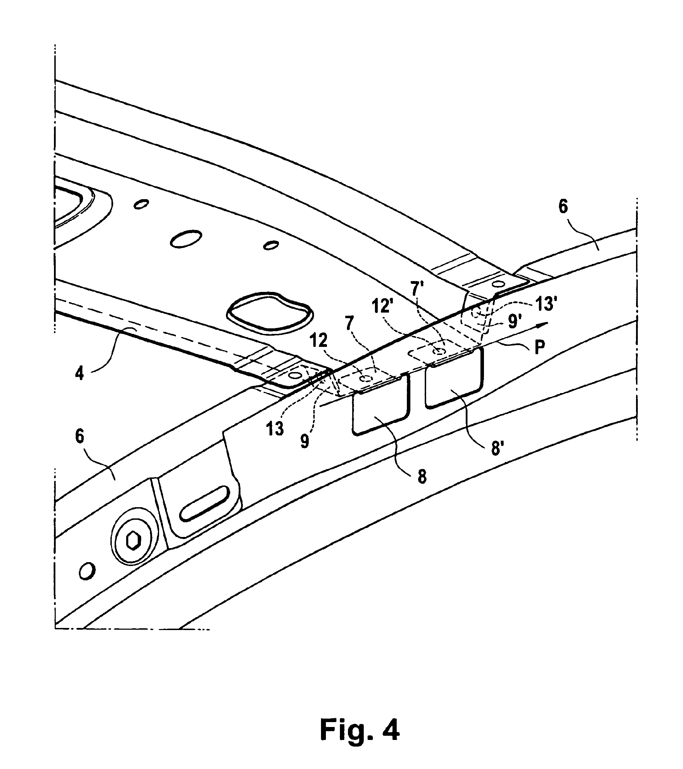

Fig. 4 zeigt den Anbindungsbereich A in vergrößerter Darstellung. In dieser perspektivischen Seitenansicht erkennt man zwei Öffnungen 8 bzw. 8' im inneren Profilteil 2 der A-Säule, entstanden durch Schwenken der Haltelaschen 7 bzw. 7' um eine durch den Pfeil P angedeutete Achse. Die Haltelaschen 7 und 7' sind an den Schweißpunkten 12 und 12 mit dem vorderen Dachrahmenprofil verschweißt. Der Anlageflansch 6 ist im Anbindungsbereich unterbrochen und ist zusätzlich bezogen auf die Profillängsrichtung vorne und hinten abgesenkt. In diesem Aussparungsbereich ist sie damit als Haltasche 9 bzw. 9' ausgebildet und mit dem vorderen Dachrahmenprofil 4 über die Schweißpunkte 13 und 13' verschweißt.

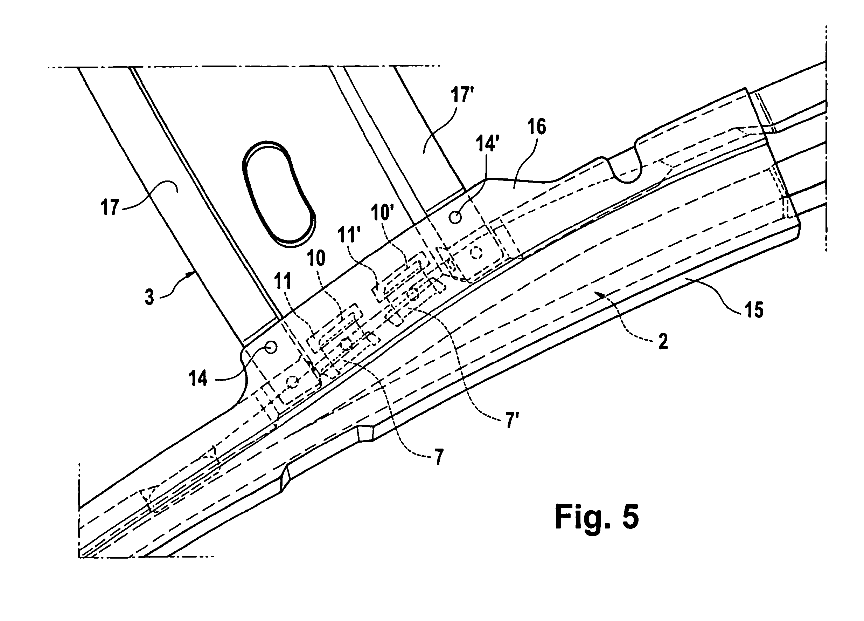

Figur 5 ist eine Draufsicht des Anbindungsbereichs entsprechend zu Figur 4. Hier erkennt man erneut die Haltelaschen 7 bzw. 7' auf denen das vordere Dachrahmenprofil 4 zu liegen kommt, und die beiden im wesentlichen senkrecht angeordneten Haltelaschen 9 bzw. 9' im vorderen und hinteren Randbereich des Anlageflansches 6. Durch die zusätzlichen Haltelaschen kann die Torsionssteifigkeit erhöht und die Materialdicke gemindert werden. Die Haltelaschen 7,7' weisen am bezogen auf das innenliegende Ä-Säulenprofilteil 2 abgewandten Ende ein abgekantetes Ende 10,10' auf, welches in korrespondierende durchgehende Öffnungen 11,11' des vorderen Dachrahmenprofils 4 eingreift.

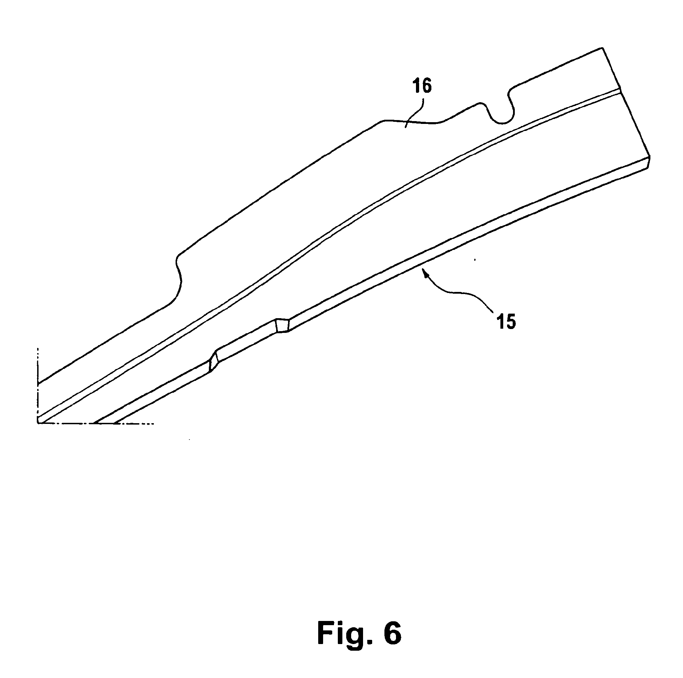

Weiterhin erkennt man in Figur 5, ergänzend hierzu in Fig. 6, das sich in der A-Säule angeordnete Verstärkungsblech 15. Dieses Verstärkungsblech 15 folgt im Anbindungsbereich nicht mehr der Profillängskrümmung, sondern ist dort zum Dachrahmenprofil 4 hin verbreitert. Bei weiterhin einstückiger Ausbildung erstreckt sich dieser laschenförmige Verbreiterungsbereich 16 des Verstärkungsblechs 15 weniger als 4 cm, bevorzugt weniger als 3 cm nach innen. Damit kann das Verstärkungsblech 15 direkt, d.h. in zwei Blechlagen, mit den Anlageflanschen 17 bzw. 17' des vorderen Dachrahmenprofils 4 über Schweißpunkte 14 bzw. 14' verschweißt werden. Auch hiermit kann die Torsionssteifigkeit erhöht und die Materialdicke des innenliegenden Profilteils 2 gemindert werden.

### Bezugszeichenliste

- 01: äußere Seitenwand
- 02: innenliegender Profilteil der A-Säule
- 03: Dach
- 04: vorderes Dachrahmenprofil
- 05: abstehender Schenkel
- 06: Anlageflansch
- 07: Haltelasche
- 07': Haltelasche
- 08: Öffnung
- 08': Öffnung
- 09: Haltelasche
- 09': Haltelasche
- 10: abgekantetes Ende der Haltelasche
- 10': abgekantetes Ende der Haltelasche
- 11: durchgehende Öffnung
- 11': durchgehende Öffnung
- 12: Schweißpunkt
- 12': Schweißpunkt
- 13: Schweißpunkt
- 13': Schweißpunkt
- 14: Schweißpunkt
- 14': Schweißpunkt
- 15: Verstärkungsblech
- 16: Verbreiterungsbereich der A-Säulenverstärkung
- 17: Anlageflansch
- 17': Anlageflansch

- A: Anbindungsbereich

## Patentansprüche

1. Karosseriesäule eines Kraftfahrzeugs, insbesondere A-Säule, mit einem innenliegenden Profilteil (2),
wobei für das innenliegende Profilteil (2) mindestens eine seitlich nach innen herausgeführte Haltelasche (7,7') zum flächigen Auflegen und Verschweißen des Dachrahmenprofils (4) vorgesehen ist,
**dadurch gekennzeichnet,**
**dass** neben einer das Dachrahmenprofil weitgehend mittig aufnehmenden Haltelasche zwei weitere Haltelaschen zum Auflegen und Verschweißen des vorderen und hinteren Bereichs des Dachrahmenprofils vorgesehen sind.

2. Karosseriesäule nach Anspruch 1,
**dadurch gekennzeichnet,**
**dass** die Haltelasche aus dem innenliegenden Profilteil herausgedrückt ist.

3. Karosseriesäule nach Anspruch 1 oder Anspruch 2,
**dadurch gekennzeichnet,**
**dass** die Haltelasche an ihrem dem Säulenprofil abgewandten Ende abgekantet ist (10,10') um in eine hierzu korrespondierende durchgehende Öffnung (11,11') des Dachrahmenprofils eingreifen zu können.

4. Karosseriesäule nach einem der Ansprüche 1 bis 3,
**dadurch gekennzeichnet,**
**dass** der Anlageflansch (6) des innenliegenden Profilteils (2) im Anbindungsbereich (A) unterbrochen ist und an den dem Anbindungsbereich zugewandten Enden rampenförmig abgesenkt ist.

5. Karosseriesäule nach einem der Ansprüche 1 bis 4,
**dadurch gekennzeichnet,**
**dass** ihr innenliegendes Profilteil (2) aus einem hochfesten Stahl besteht.

6. Karosseriesäule nach einem der Ansprüche 1 bis 5,
**dadurch gekennzeichnet,**
**dass** sie ein in der Säule angeordnetes Verstärkungsblech (15) besitzt das im Anbindungsbereich laschenförmig nach innen verbreitert ist, sodass es mit dem Dachrahmenprofil direkt verschweißbar ist.

## Claims

1. A vehicle body pillar of a motor vehicle, especially the A-pillar, having an internally arranged profile part (2), with at least one support lug (7, 7') being provided for planar placing and welding of the roof frame profile (4) for the internally arranged profile part (2), which lug is guided out laterally to the inside, **characterized in that** in addition to a support lug which accommodates the roof frame profile in a substantially central way two further holding lugs for placing and welding the front and rear region of the roof frame profile are provided.

2. A vehicle body pillar according to claim 1, **characterized**
**in that** the support lug is pressed out of the inwardly disposed profile part.

3. A vehicle body pillar according to claim 1 or claim 2, **characterized in that** the support lug is bent off (10, 10') at its end averted from the pillar profile in order to be able to engage in a corresponding continuous opening (11, 11') of the roof frame profile.

4. A vehicle body pillar according to one of the claims 1 to 3, **characterized in that** the contact flange (6) of the inwardly disposed profile part (2) is interrupted in the attachment area (A) and is reduced in a ramp-like fashion at the ends facing the attachment area.

5. A vehicle body pillar according to one of the claims 1 to 4, **characterized in that** its inwardly disposed profile part (2) consists of high-strength steel.

6. A vehicle body pillar according to one of the claims 1 to 5, **characterized in that** it comprises a reinforcing plate (15) which is arranged in the pillar and is widened in the manner of lugs in the contact region towards the inside, so that it can be welded together directly with the roof frame profile.

## Revendications

1. Montant de carrosserie d'un véhicule à moteur, en particulier montant A, avec une partie de profilé intérieure (2), dans lequel est prévue pour la partie de profilé intérieure (2) au moins une patte de support (7, 7') dépassant latéralement vers l'intérieur pour la pose à plat et le soudage du profilé de cadre de toit (4), **caractérisé en ce qu'**il est prévu, outre une patte de support recevant le profilé de cadre de toit sensiblement au milieu, deux autres pattes de support pour la pose et le soudage des parties avant et arrière du profilé de cadre de toit.

2. Montant de carrosserie selon la revendication 1, **caractérisé en ce que** la patte de support est repoussée hors de la partie de profilé intérieure.

3. Montant de carrosserie selon la revendication 1 ou 2, **caractérisé en ce que** la patte de support est pliée (10, 10') à son extrémité opposée au profilé de montant pour pouvoir se mettre en prise dans une ouverture traversante (11, 11') correspondante du profilé de cadre de toit.

4. Montant de carrosserie selon l'une des revendications 1 à 3, **caractérisé en ce que** la bride d'appui (6) de la partie de profilé intérieure (2) est interrompue dans la zone d'assemblage (A) et abaissée en forme de rampe aux extrémités tournées vers la zone d'assemblage.

5. Montant de carrosserie selon l'une des revendications 1 à 4, **caractérisé en ce que** sa partie de profilé intérieure (2) se compose d'un acier à haute résistance.

6. Montant de carrosserie selon l'une des revendications 1 à 5, **caractérisé en ce qu'**il possède une tôle de renfort (15) disposée dans le montant, qui est élargie en forme de patte vers l'intérieur dans la zone d'assemblage de sorte qu'elle peut être soudée directement au profilé de cadre de toit.
